**Europäisches Patentamt**

**European Patent Office**

**Office européen des brevets**

(19)

(11) Veröffentlichungsnummer : **0 347 445 B1**

(12)

# EUROPÄISCHE PATENTSCHRIFT

(45) Veröffentlichungstag der Patentschrift :
27.05.92 Patentblatt 92/22

(51) Int. Cl.$^5$ : **B01D 29/09**

(21) Anmeldenummer : **88909982.6**

(22) Anmeldetag : **28.11.88**

(86) Internationale Anmeldenummer :
**PCT/DE88/00734**

(87) Internationale Veröffentlichungsnummer :
**WO 89/05183 15.06.89 Gazette 89/13**

(54) **Schwerkraftbandfilter zum Filtern von Feststoffpartikel enthaltenden Flüssigkeiten.**

(30) Priorität : **03.12.87 DE 3740992**

(43) Veröffentlichungstag der Anmeldung :
**27.12.89 Patentblatt 89/52**

(45) Bekanntmachung des Hinweises auf die
Patenterteilung :
**27.05.92 Patentblatt 92/22**

(84) Benannte Vertragsstaaten :
**AT CH DE FR GB IT LI NL SE**

(56) Entgegenhaltungen :
**EP-A- 0 155 466**

(56) Entgegenhaltungen :
**DE-A- 2 852 214**
**FR-A- 2 145 714**
**US-A- 468 042**
**US-A- 4 057 437**

(73) Patentinhaber : **Wilkes, Kurt**
**Friedrich-Ebert-Strasse 48**
**W-7950 Biberach (DE)**

(72) Erfinder : **Wilkes, Kurt**
**Friedrich-Ebert-Strasse 48**
**W-7950 Biberach (DE)**

(74) Vertreter : **König, Beate et al**
**König & Petra Patentanwälte Seidlstrasse 25**
**W-8000 München 2 (DE)**

Jouve, 18, rue Saint-Denis, 75001 PARIS

EP 0 347 445 B1

## Beschreibung

Die Erfindung betrifft einen Schwerkraftbandfilter zum Filtern von Feststoffpartikel enthaltenden Flüssigkeiten durch ein Filterband.

Aus der US-A-4 686 042 ist ein Schwerkraftbandfilter bekannt, bei dem ein flüssigkeitsdurchlässiges Endlosband über Umlenkwalzen geführt angetrieben wird und zusammen mit zwei abgedichtet angeordneten, umlaufenden Seitenscheiben einen muldenförmigen Filtrierraum bildet, wobei eine Bandstützung vorgesehen ist, eine Zuleitung der Feststoffpartikel enthaltenden Flüssigkeit in den Filtrierraum vorgesehen ist, zwischen den Seitenscheiben um ihre Achse schwenkbar aufgehängte Mitnehmerleisten vorgesehen sind, die das Austragen von Filterkuchen aus dem muldenförmigen Filtrierraum unterstützen und in die Abgabestellung über den Filtermuldenumfang hinaus bewegbar sind, und unterhalb des Filtrierraums eine Auffangeinrichtung zum Sammeln und Abführen des Filtrats angeordnet ist. Die Mitnehmerleisten weisen Stützstifte auf, die zur Anlage an mit den Befestigungseinrichtungen für die Mitnehmerleisten verbundenen Stiften gelangen. Die Stifte dienen zur Auflage und Rückschwenksicherung für die Mitnehmerleisten. Das Endlosband des Schwerkraftbandfilters ist als Trägerband ausgebildet, auf dem ein von einer Rolle abgezogenes Filterband mitgeführt wird. Durch die nur einmalige Verwendung des Filterbandes kommt es zu erheblichem Versorgungsaufwand und Materialkosten.

Aus der EP-A-0 155 466 ist ein Schwerkraftbandfilter mit Mitnehmerleisten bekannt, die lediglich in Radialrichtung beweglich, keinesfalls aber schwenkbar aufgehängt sind. Eine Zwangsverschwenkung ist daher nicht möglich. Außerdem werden die Mitnehmerleisten bei dieser Filterkonstruktion konstruktiv bedingt nicht über den Umfang der Seitenscheiben hinaus bewegt. Dieses führt dazu, daß Feststoffkuchen im Übergabebereich von den Mitnehmerleisten wieder zurück in die Filtermulde fällt. Für die Übergabe des Feststoffkuchens von den Mitnehmerleisten zu einem Aufnahmebehälter sind daher gesonderte Hilfsvorrichtungen erforderlich. Auch bei diesem bekannten Schwerkraftbandfilter wird ein auf einem Trägerband mitlaufendes endliches Filterband verwendet.

Der Erfindung liegt die Aufgabe zugrunde, einen Schwerkraftbandfilter zu schaffen, der einen zuverlässigen Austrag des Feststoffkuchens gestattet, wobei die Betriebskosten möglichst niedrig sind.

Diese Aufgabe ist erfindungsgemäß bei einem Schwerkraftbandfilter mit den Merkmalen des Anspruchs 1 gelöst. Vorteilhafte Weiterbildungen des erfindungsgemäßen Schwerkraftbandfilters sind Gegenstand der Unteransprüche.

Ein erfindungsgemäßer Schwerkraftbandfilter zum Filtern von Feststoffpartikel enthaltenden Flüssigkeiten durch ein Filterband umfaßt somit ein flüssigkeitsdurchlässiges Endlosband das über Umlenkwalzen geführt angetrieben wird und zusammen mit zwei abgedichtet angeordneten, umlaufenden Seitenscheiben einen muldenförmigen Filtrierraum bildet, und eine Zuleitung der Feststoffpartikel enthaltenden Flüssigkeit in einen Filtrierraum. Zwischen den Seitenscheiben sind um ihre Achse schwenkbar aufgehängte Mitnehmerleisten vorgesehen, die das Austragen von Filterkuchen aus dem muldenförmigen Filtrierraum unterstützen und bewegbar sind. Unterhalb des Filtrierraums ist eine Auffangeinrichtung zum Sammeln und Abführen des Filtrats angeordnet. Ein Umkehrelement ist dicht hinter der Abgabestellung angeordnet und schwenkt die Mitnehmerleisten mit formschlüssigem Eingriff in die Pendelstellung zurück.

Die Mitnehmerleisten des erfindungsgemäßen Schwerkraftbandfilters sind selbsttätig etwa radial zur Filterachse über den Umfang der Seitenscheiben hinaus bewegbar. Auf diese Weise ist es möglich, beim Auflauf auf eine Umlenkrolle den auf dem Filterband liegenden Feststoffkuchen mit den Mitnehmerleisten noch soweit mitzuschieben, daß dieser zuverlässig vom Filterband bis zum Abwurf weitergefördert wird. Durch das Umlenkelement wird eine zwangsweise Verschwenkung der Mitnehmerleisten mit Verlassen der Abgabestellung bewirkt, durch die die betreffende Mitnehmerleiste jeweils nach dem Austrag aus der über den Umfang der Seitenscheiben hinaus ragenden Abgabestellung sicher wieder in die lotrechte Ausgangsstellung zurückgeführt wird. Fehlschaltungen werden auf diese Weise praktisch vollständig vermieden. Das Vorsehen des Umlenkelementes als Schikane gewährleistet so auf einfache Weise, einen ungestörten Betrieb des Schwerkraftbandfilters sicherzustellen, so daß ein effektiver Austrag der Feststoffpartikel ermöglicht ist.

Gemäß einem bevorzugten Ausführungsbeispiel ist das Umlenkelement am freien Ende eines Auslegerstabes befestigt, der mit seinem Innenende im Bereich der stationären Seitenscheibenachse angebracht ist. Dabei ist das Umlenkelement vorteilhaft nahe dem Außenrand einer Seitenscheibe angeordnet und weist wenigstens in seinem äußeren Bereich eine Umfangskurve auf, an der sich eine kante der jeweiligen Mitnehmerleiste abstützt, wobei das Umlenkelement in seinem in der Drehrichtung hinteren Bereich eine Nase aufweist, bis zu der die Mitnehmerleisten jeweils entlanggezogen werden. Auf diese Weise kommt es zu einem zuverlässigen Austrag und einer sicheren Führung der Mitnehmerleisten.

Eine im in der Drehrichtung vorderen Bereich des Umlenkelements vorhandene Anlaufstelle reicht in die Bewegungsbahn der Mitnehmerleiste hinein und schwenkt diese hoch. Durch das Zurückklappen der Mitnehmerleiste beim Aufprall auf das Umlenkelement wird der noch am Mitnehmer haftende Restschmutz von der Mitnehmerleiste gelöst und durch die nachfolgende Positionsveränderung des Mitnehmers in die Filtermulde zurückgeführt.

Vorzugsweise sind die Mitnehmerleisten jeweils mit einem in der Austragstellung etwa quer zum Filterband abstehenden Steg ausgebildet, der auszutragende Feststoffpartikel fördert, wobei der Steg an der in der Austragstellung dem Filterband abgewandten kante mit einer sich in Förderrichtung schräg nach vorne erstreckenden Abdeckleiste versehen ist.

Die Mitnehmerleisten können jeweils um eine feste oder veränderliche Lagerachse (Gelenkbolzen) exzentrisch pendelnd an den beiden Seitenscheiben gelagert sein. Hierdurch wird die Verschiebebewegung der Mitnehmerleisten bei der Übergabe des Filterkuchens unterstützt. Die Mitnehmerleisten sind durch ihren Eigengewicht gesteuert, im unteren Bereich der Filtervorrichtung liegen sie unter Eigengewicht auf dem Filterband an, ragen schließlich aus dem Umfang der Filtervorrichtung heraus und werden schließlich durch ihr Eigengewicht in den Innenraum der Filtervorrichtung zurückgeführt.

Auf dem Endlosband kann als Trägerband ein von einer Vliesrolle abgezogenes Filtervlies anliegen und mitgeführt werden. Alternativ ist das Endlosband ein poröses Filterband aus einem flexiblen, zugfesten, verschleißfesten Werkstoff, vorzugsweise in Form eines Geflechts oder Gewebes von Fasern, Fäden oder Drähten aus biegeelastischem, zug- und verschleißfestem Werkstoff, insbesondere aus Edelstahl oder kunststoffummantelten Drähten. Bei dem erfindungsgemäßen Endlosband wird das Untertrum außerhalb der Wanne im Luftraum zurückgeführt und dort bis zum nächsten Filtervorgang mit bekannten Mitteln nach Belieben gereinigt. Es ist also nur Sorge dafür zu tragen, daß das Filterband von sich aus diese Reinigung ermöglicht und zum anderen so widerstandsfähig ausgebildet ist, daß es für eine ausreichend lange Betriebsperiode eingesetzt werden kann, wodurch die Betriebskosten erheblich gesenkt werden. Die Reinigung soll dabei lediglich gewährleisten, daß ein hinreichender Filtereffekt verblieben ist. Da das endlose Filterband ein selbständiges Maschinenelement ist und leicht und schnell ausgewechselt werden kann, kann es empfehlenswert sein, in bestimmten Intervallen das Filterband einer Grundreinigung außerhalb der Filterzone zuzuführen. Ansonsten lagert sich auf dem Filterband zunehmend mehr Filterkuchen ab. Hierdurch ist die Feinfilterwirkung gesteigert, d.h. ein für etwa 60 $\mu$m ausgelegtes Filterband kann durch eine solche Filterkuchenschicht etwa bis 30 $\mu$m und damit feiner und gründlicher filtern.

Für das geflecht- bzw. gewebeartig ausgebildete Endlosfilterband benötigte dünne Bauelemente sind in praktisch allen herstellbaren Qualitäten verfügbar und bringen daher ohne weiteres die erforderliche Verschleißfestigkeit und Lebensdauer. Sie lassen sich in außergewöhnlich großer Gleichmäßigkeit ineinanderfügen, so daß auch die verbliebenen engen Spalten praktisch gleichbleibende Weite haben. Regelmäßig ist eine einzige Geflechtlage ausreichend, d.h. das Filterband ist dünn und dadurch auch bei großem Formwiderstand von etwa Edelstahldrähten hinreichend biegsam und läßt sich zudem auf einfache Weise wieder reinigen.

Für die Bandreinigung kommen zweckmäßig Spül- oder Blasdüsen in Betracht, beispielsweise eine Schlitzdüse, die insbesondere durch eine Reihe Punktdüsen mit einander übergreifenden Sprühkegeln gebildet ist.

Weitere Ausgestaltungen und Vorteile der Erfindung sind in den weiteren Unteransprüchen und in der folgenden Beschreibung einiger Ausführungsbeispiele der Erfindung festgehalten. Es zeigen

Fig. 1 einen Längsschnitt durch einen erfindungsgemäßen Schwerkraftbandfilter nach Linie I-I in Fig. 2,

Fig. 2 einen Schnitt nach Linie II-II in Fig. 1,

Fig. 3 eine Draufsicht des Schwerkraftbandfilters von Fig. 1, wobei das Obertrum des Filterbandes weggeschnitten ist,

Fig. 4 in vergrößertem Maßstab die Stelle IV in Fig. 1 kurz vor dem Lösen einer Mitnehmerleiste vom Filterband,

Fig. 5 ebenfalls in vergrößertem Maßstab die Steuerung der Abschalteinrichtung durch eine nicht eingeschwenkte Mitnehmerleiste,

Fig. 6 eine weitgehend spiegelbildlich der Fig. 1 entsprechende Seitenansicht einer abgewandelten Ausführungsform der Erfindung,

Fig. 7 eine Teilansicht dieser Vorrichtung, in Richtung des Pfeiles VII in Fig. 6 gesehend, und

Fig. 8 eine vergrößerte Darstellung des Schwenkvorganges der Mitnehmerleisten an des Stelle VIII in Fig. 6.

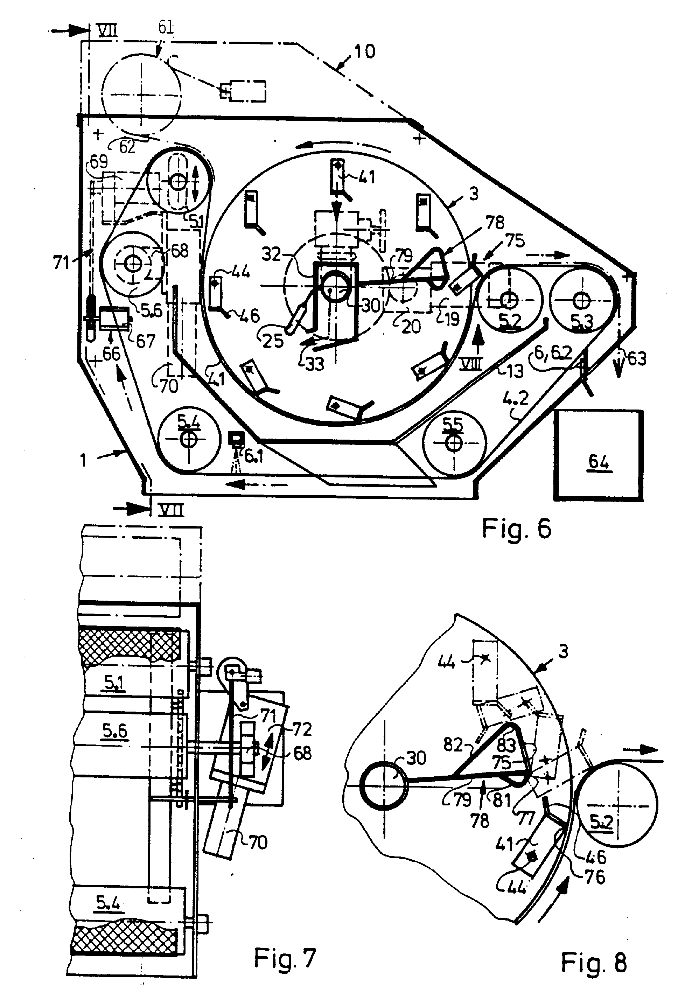

Der in Fig. 4 dargestellte Schwerkraftbandfilter besteht im wesentlichen aus einem gehäuse (1) mit einer in diesem eingebauten wanne (2), einer Scheibentrommel (3), einem endlosen Filterband (4) mit Obertrum (4.1) und Untertrum (4.2), sowie einer Rollenführung (5) mit Umlenkrollen (5.1 bis 5.5), der Reinigungsvorrichtung (6) mit Blasdüsen (6.1) und einer Abstreifleiste (6.2).

Das Gehäuse (1) weist zwei Seitenwände (11,12) auf, die einen abhebbaren Deckel (10) tragen und zwischen denen, diese verbindend, fest und dicht die wanne (2) eingeschweißt ist. Ihr Boden (13) hat einen lotrechten Abstand (a) von der Aufstellfläche (14). Dadurch werden ein Filtrierraum (15) innerhalb der Scheibentrommel (3), ein Reinflüssigkeits- bzw. Filtratraum (16) zwischen Scheibentrommel (3) und der Wanne (2), sowie außerhalb dieser ein Luftraum (17) voneinander getrennt.

Das Obertrum (4.1) des endlosen Filterbandes (4) liegt zwi-schen den Umlenkrollen (5.1) und (5.2) am Umfang der Scheibentrommel (3) an, während das Untertrum (4.2) des Filterbandes außerhalb/unterhalb der Wanne (2) im Luftraum (17) zurückgeführt wird. Zum Antrieb der Scheibentrommel (3) und damit des Filterbandes (4) im Drehsinne des Pfeiles (18) dient ein elektrischer Antriebsmotor (19) mit Mehrstufengetriebe (20). Dieser ist in Abhängigkeit von der Höhe des Flüssigkeitsspiegels (23) durch einen Schwimmer mittels Schwimmerschalter (25) steuerbar. Der Antriebsschluß zwischen Scheibentrommel (3) und Filterband (4) wird dabei durch dir mittels Federkraft selbsttätige Höheneinstelluny der Umlenkrolle (5.1) gemäß Doppelpfeil (26) gewährleistet.

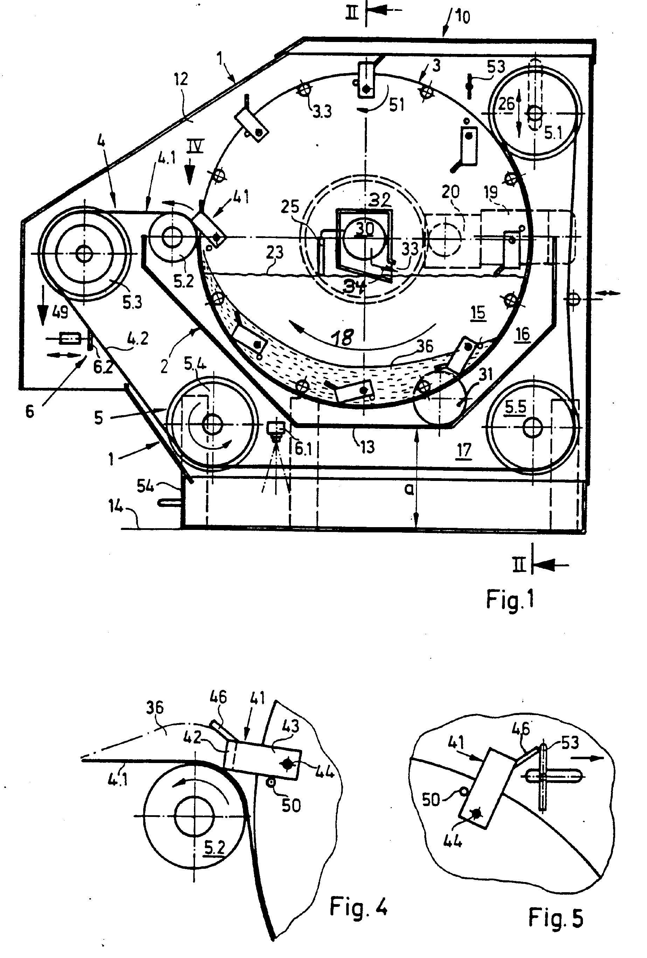

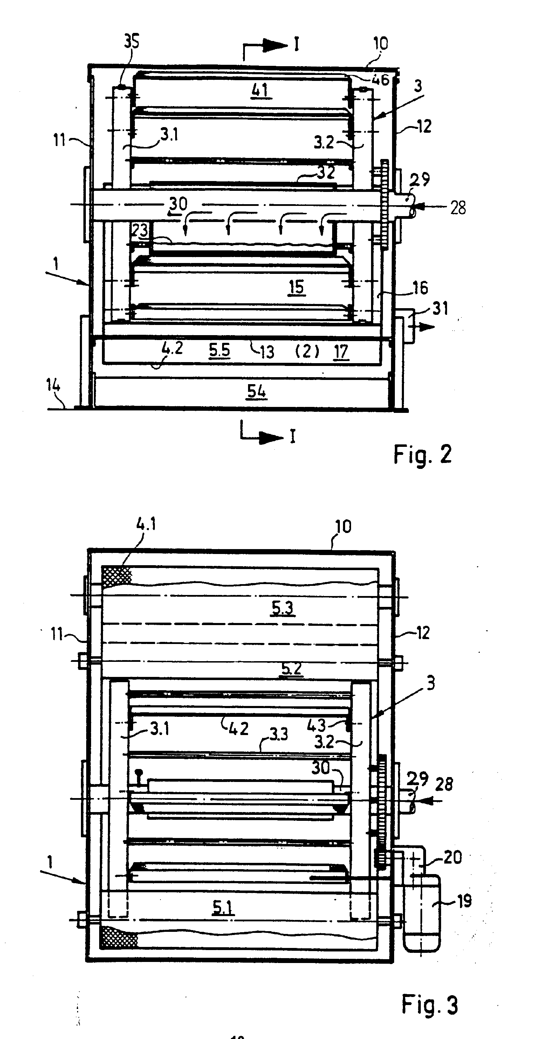

Die die Feststoffpartikel enthaltende Schmutzflüssigkeit wird gemäß Pfeil (28) in Fig. 2 durch einen Endzapfen (29) einer hohlen Seitenscheibenachse (30) eingeleitet, und die gefilterte Reinflüssigkeit wird durch einen Ablaufstutzen (31) abgeführt. Auf der Achse (30) sitzt fest ein Einleitkasten (32), der gemäß Fig. 1 eine Auslaß-Schlitzdüse (33) aufweist, welche die die Feststoffpartikel enthaltende Flüssigkeit gemäß Pfeil (34) zur Eintauchseite des Filterbandes (4) rechts in Fig. 1 hinleitet, damit vor allem die frish eingeleitete Flüssigkeit möglichst lange mit dem Filterband in Kontakt bleibt.

Die Scheibentrommel (3) weist zwei zylinderförmige Seitenscheiben (3.1) und (3.2) auf, die durch an ihrem Umfang gleichmäßig vertielte Zuganker (3.3) gegeneinander verspannt sind und mittels Lager (3.4) drehbar und abgedichtet auf der Achse (30) sitzen.

Am Umfang der Seitenscheiben (3.1) und (3.2) sind Dichtungsringe (35) aus Gummi oder gummiartigem Kunststoff angebracht, der gegenüber der behandelten Flüssigkeit chemisch widerstandsfähig ist und durch die Anlage des Obertrums (4.1) eine kreissegmentförmige Abdichtung nach außen für den muldenförmigen Filtrierraum (15) schafft.

Aus diesem Raum kann somit die die Feststoffpartikel enthaltende Flüssigkeit nur durch den unteren Teil des Obertrums (4.1) des Filterbandes (4) abfließen. Bei stehender Scheibentrommel (3) bildet sich dabei auf der Oberseite des Obertrums (4.1) eine Schlamm-bzw. Filterkuchen schicht (36), die das Filterband teilweise verstopft, und seine Durchlässigkeit mindert. Da die die Feststoffpartikel enthaltende Flüssigkeit mit unveränderter Menge in der Zeiteinheit zugeführt wird, steigt dann der Flüssigkeitsspiegel (23) in der Trommel an, und durch den Schwimmerschalter (25) wird der Antriebsmotor (19) eingeschaltet, der die Scheibentrommel (3) über einen Winkel von etwa 120° bis 150° weiterdreht, bis er durch den Schwimmerschalter (25) wieder abgeschaltet wird. Dei jetzt wirksame Filterfläche läßt zunächst mehr Flüssigkeit durch, als in der Zeiteinheit zugeführt wird. Dadurch wird aber wiederum eine Filterkuchenschicht (36) aufgebaut, die den Durchfluß behindert und erneut zu einer Einschaltung durch den Schwimmerschalter (25) führt.

Statt die die Feststoffpartikel enthaltende Flüssigkeit unmittelbar oder durch die Trommelachse (30) in die Scheibentrommel und damit die Vanne einzuleiten, kann unter der Vanne (2) und ggf. dem Gehäuse (1) ein Auffangbehälter für Feststoffpartikel enthaltende Flüssigkeit und Reinigungsflüssigkeit angebracht werden. In diesem Fall wird zweckmäßigerweise die zugeführte Feststoffpartikel enthaltende Flüssigkeit zunächst in diesen Behälter geleitet und von dort durch eine Pumpe in die Scheibentrommel hochgefördert.

Feststoffpartikel enthaltende Flüssigkeiten ändern oft leicht unkontrolliert ihre Konsistenz, insbesondere ihre Viskositätseigenschaften. Bei technischen Geräten, die dauernd oder überwiegend in Feststoffpartikel enthaltenden Flüssigkeiten arbeiten müssen, lassen sich auch bei hochqualifizierter technischer Ausführung Störungen nicht immer ausschließen. Zur Absicherung der Steuerung durch den Schwimmerschalter (25) wird daher zweckmäßigerweise eine zweite Abschaltung durch ein Zeitglied vorgesehen, das beim Abschalten des Scheibenlantriebs in Gang gesetzt wird und mit seinem Ablauf unter Überbrückung des Schwimmerschalters (25) den Antriebsmotor (19) wieder einschaltet. Es versteht sich, daß anstelle einer Schwimmerschaltung auch eine andere, insbesondere berührungsfrei arbeitende Tastschaltung für den Flüssigkeitsspiegel herangezogen werden kann.

Damit bei der Drehung der Trommel die Filterkuchenschicht (36) mit hochgefördert wird, sind in gleicher Umfangsteilung zwischen den Zugankern (3.3) Mitnehmerleisten (41) vorgesehen. Der Steg (42) einer jeden Mitnehmerleiste (41) ist an seinen Enden mittels rechtwinklig abgebogener Schenkel (43) über Gelenkbolzen (44) an den seitenscheiben (3.1 und 3.2) angelenkt. Er bildet im Betrieb mit dem Filterband einen spitzen Winkel von etwa 70° bis 80°, der sich in der Abgabestellung nach Fig. 4 dem rechten Winkel nähert. Ein darüber angebrachter Deckstreifen (46) deckt die Filterkuchenschicht (36) etwas ab und stellt sicher, daß sie auf den waagerechten Teil des Obertrums (4.1) zwischen den Umlenkrollen (5.2) und (5.3)aufgeschoben wird. Von dort kann sie gemäß Pfeil (49) in ein Auffanggefäß herabfallen und weitergefördert werden.

Mit dem Abheben von der Unlenkrolle (5.2) wird die Minehmerleiste (41) durch einen Anschlag (50) abgestützt, der ihn in der radialen Stellung hält, bis er seine senkrechte Lage in Fig. 1 oben erreicht hat und dann gemäß Pfeil (51) um 180° aus seiner Projektionsstellung über dem Rand der Scheibentrommel (3) in den Innenraum des Schwerkrafbandfilters nach unten kippt.

In die Bahn der hochragenden Mitnehmerleiste (41), insbesondere des Deckstreifens (46),ragt ein von einem Tastschalter ausgehender Tasthebel (53), der bei Betätigung den Antriebsmotor (19) und ggf. die Pumpe für die die Feststoffpartikel enthaltende Flüssigkeit abschaltet.

Unterhalb des Untertrum-Bereiches mit dem Umlenkrollen (5.4) und (5.5) ist eine Schublade (54) oder ein Behälter angebracht, wo sich Tropfwasser und andere Flüssigkeitsteile sammeln und von dort mit Heberpumpe einer weiteren Filterung zugeführt werden können.

Das Filterband (4) ist hier als einlagiges Geflecht in Köper-Machart aus hochfesten Edelstahldrähten hergestellt. Grundsätzlich ist aber auch die Verwendung anderer hochfester Fasern, Faden oder Drähte und auch der Einsatz von Verbundmaterialien, etwa in Form von kunststoffummantelten bruchfesten Drähten möglich.

Sollte für irgendwelche Zwecke die Reinigungsfunktion mit einem endlosen Filterband keine zufriedenstellenden Ergebnisse liefern, so kann stets ein endlicher Vliesstreifen zwischen Filterband und Seitenscheiben eingefürht werden. Zu diesem zweck läß sich an der Einlaufseite eine Lagerung für eine Vliesrolle (61) anbringen, wie in Fig. 6 oben links gezeigt ist. Der von dieser Vliersrolle abgezogene endliche Filterstreifen bzw. Filtervlies (62) läßt sich von dort über die Umlenkrolle (5.1) zwischen der Scheibentrommel (3) und dem Obertrum (4.1) des endlosen Filterbandes (4) einführen. Das Filterband (4) dient dabei als Trägerband für das Filtervlies (62), das beim Auslaufen aus der Maschine gemäß Pfeil (63) in einen Auffangbehälter (64) gelangt.

Während sich das Filtervlies ohne weiteres auf seinem Trägerband zentrieren läßt, kann dieses, d.h. das Endlosband mitunter aus der vorgegebenen Bahn seitlich ablaufen. Dem wirkt eine Geradlaufeinrichtung (66) entgegen, deren Taster (67) unterhalb eines lotrecht verstellbaren Lagers (68) einer weiteren Umlenkrolle (5.6) an einer Seitenkante des Untertrums (4.2) des Filterbandes (4) anliegt. Zeigt sich eine Abweichung vom Sollwert, so wird durch das Gestänge (71) ein elektrischer Sensor (69) verstellt, der über eine Stellvorrichtung (72) mit einem Stellmotor (70) das Lager (68) in die erforderliche Richtung verschiebt und dadurch die Umlenkrolle (5.6) in bezug auf ihr zweites Rollenlager verstellt, insbesondere die Rolle schrägstellt, um eine Rückführung des Bandes zu ermöglichen. Die Mitnehmerleisten (41) sind hier normalerweise über den ganzen Winkel um ihre Gelenkbolzen (44) frei drehbar, in der Regel also pendelnd, wie links und oben in Fig. 6 gezeigt. Unten kommen sie zur Auflage an der Innenseite des Filterbandes, bis ihre untere Vorderkante (76) nach der rechten Darstellung in Fig. 6 in einer Abgabestellung (75) auf die Umlenkrolle (5.2) aufläuft. Unmittelbar anschließend kommt jedoch die diagonal entgegengesetzt liegende Kante (77) an einem Umlenkelement (78) zur Anlage, das am freien Ende eines radial von der gerätfesten Achse (30) abstehenden und an dieser befestigten Auslegerstab (79) befestigt ist.

Das Umlenkelement (78) wird dabei durch zwei Blechbügel (81,82) gebildet, die, wie am besten aus Fig. 8 zu ersehen ist, auf entgegengesetzten Seiten am Auslegerstab (79) angeschweißt sind.

Die Kante (77) der Mitnehmerleiste (41) läuft dabei zunächst an der Außenseite des als Auflaufstelle dienenden Bügels (81) auf die Umfangskurve (74) auf. Dadurch wird die Mitnehmerleiste (41) aus ihrer annäherd waagrechten Stellung immer weiter hochgeschwenkt, bis sie mit ihrer längeren Unterseite an der Nase (83) des Bügels (82) entlanggezogen wird und dann von dem Umlenkelement (78) freikommt und sich wieder in die lotrechte Stellung einpendelt. Fehlschaltungen werden auf diese Weise praktisch vollständig vermieden.

Parallel zum Schalter (25) wirkt auf die Steuerung des Antriebsmotors (19) für das endlose Filterband (4) noch eine nicht dargestellte Zeitsteuerung, die einen löschbaren Speicher für die Betriebszeit des Bandantriebs aufweist. Nach Ablauf der vorgegebenen maximalen Betriebsdauer wird der Bandantrieb unabhängig von der Funktion des Schwimmerschalters (25) wieder eingeschaltet. Durch eine Überlagerungsschaltung ist dabei sichergestellt, daß Betriebspausen nicht mitgerechnet werden. Die Neueinschaltung des Bandantriebes ist so maßgeblich durch die Filterbetriebszeit, also durch die Dauer der Zuführung von Feststoffpartikel enthaltender Flüssigkeit in der vorgegebenen Intensität bestimmt. Hierzu helfen elektrische oder elektronische Speicher, die am Ende eines Betriebszyklus entleert werden.

## Patentansprüche

1. Schwerkraftbandfilter zum Filtern von Feststoffpartikel enthaltenden Flüssigkeiten durch ein Filterband (4), bei dem
   – ein flüssigkeitsdurchlässiges Endlosband (4) über Umlenkwalzen geführt angetrieben wird und zusammen mit zwei abgedichtet angeordneten, umlaufenden Seitenscheiben (3.1, 3.2) einen muldenförmigen Filtrierraum (15) bildet,
   – eine Zuleitung (30, 32) der Feststoffpartikel enthaltenden Flüssigkeit in den Filtrierraum vorgesehen ist,
   – zwischen den Seitenscheiben um ihre Achse schwenkbar aufgehängte Mitnehmerleisten (41) vorgesehen sind, die das Austragen von Filterkuchen aus dem muldenförmigen Filtrierraum (15) unterstützen und in die Abgabestellung (75) über den Umfang der Seitenscheiben (3.1, 3.2) hinaus bewegbar sind, und
– unterhalb des Filtrierraums eine Auffangeinrichtung (2) zum Sammeln und Abführen des Filtrats angeordnet ist,
dadurch **gekennzeichnet**, daß
– dicht hinter der Abgabestellung (75) ein Umlenkelement (78) angeordnet ist, das die Mitnehmerleisten (41) mit formschlüssigem Eingriff in die Pendelstellung zurückschwenkt.

2. Schwerkraftbandfilter nach Anspruch 1, dadurch **gekennzeichnet**, daß das Umlenkelement (78) am freien Ende eines Auslegerstabes (79) befestigt ist, der mit seinem Innenende im Bereich der stationären Seitenscheibenachse (30) befestigt ist.

3. Schwerkraftbandfilter nach Anspruch 1 oder 2, dadurch **gekennzeichnet**, daß das Umlenkelement (78) nahe dem Außenrand einer Seitenscheibe angeordnet ist und wenigstens in seinem äußeren Bereich eine Umfangskurve (75, 81, 83, 82) aufweist, an der sich eine Kante (77) der Mitnehmerleiste (41) abstützt.

4. Schwerkraftbandfilter nach einem der Ansprüche 1 bis 3, dadurch **gekennzeichnet**, daß das Umlenkelement (78) in seinem in der Drehrichtung vorderen Bereich eine Auflaufstelle (81) aufweist, die in die Bewegungsbahn der Mitnehmerleiste (41) hineinreicht und die Mitnehmerleiste hochschwenkt.

5. Schwerkraftbandfilter nach einem der Ansprüche 1 bis 4, dadurch **gekennzeichnet**, daß das Umlenkelement (78) in seinem in der Drehrichtung hinteren Bereich eine Nase (83) aufweist, bis zu der die Mitnehmerleisten (41) jeweils entlanggezogen werden.

6. Schwerkraftbandfilter nach einem der Ansprüche 1 bis 5, dadurch **gekennzeichnet**, daß
– die Mitnehmerleisten (41) jeweils mit einem in der Austragstellung etwa quer zum Filterband (4) abstehenden Steg (42) ausgebildet sind, der auszutragende Feststoffpartikel fördert, und
– der Steg (42) an der in der Austragstellung dem Filterband (4) abgewandten Kante mit einer Abdeckleiste (46) versehen ist, die sich in Förderrichtung schräg nach vorne erstreckt.

7. Schwerkraftbandfilter nach einem der Ansprüche 1 bis 6, dadurch **gekennzeichnet**, daß die Mitnehmerleisten (41) jeweils um eine feste oder veränderliche Lagerachse (Gelenkbolzen (44)) exzentrisch pendelnd an den beiden Seitenscheiben gelagert sind.

8. Schwerkraftbandfilter nach einem der Ansprüche 1 bis 7, dadurch **gekennzeichnet**, daß das Endlosband (4) ein poröses Filterband aus einem flexiblen, zugfesten, verschleißfesten Werkstoff ist.

9. Schwerkraftbandfilter nach Anspruch 8, dadurch **gekennzeichnet**, daß das Endlosband (4) ein Geflecht oder Gewebe von Fasern, Fäden oder Drähten aus biegeelastischem, zug- und verschleißfestem Werkstoff, insbesondere aus Edelstahl oder kunststoffummantelten Drähten ist.

10. Schwerkraftbandfilter nach einem der Ansprüche 1 bis 9, dadurch **gekennzeichnet**, daß auf dem Endlosband (4) als Trägerband ein von einer Vliesrolle (61) abgezogenes Filtervlies (62) anliegt und mitgeführt wird.

11. Schwerkraftbandfilter nach einem der Ansprüche 1 bis 10, dadurch **gekennzeichnet**, daß die Vorschubsteuerung für den Antrieb des Endlosbandes (4) einen Schwimmerschalter (25) und eine Schalteinrichtung umfaßt, die den Antrieb eine bestimmte Betriebszeitdauer nach dem jeweils vorangegangenen Bandvorschub betätigt.

12. Schwerkraftbandfilter nach Anspruch 11, dadurch **gekennzeichnet,** daß die Vorschubsteuerung für die Schalteinrichtung eine Zeitsteuerung mit einem löschbaren Speicher für eine vorgebbare maximale Betriebszeitdauer nach dem jeweils vorangegangenen Bandvorschub aufweist, wobei die Schalteinrichtung den Antrieb nach einer vorgegebenen Betriebszeitdauer einschaltet und den Speicher löscht.

13. Schwerkraftbandfilter nach einem der Ansprüche 1 bis 12, dadurch **gekennzeichnet**, daß eine Wanne (2) als Auffangeinrichtung mit einem Ablauf vorgesehen ist, in deren Innenraum sich der Filtrierraum (15) erstreckt, wobei die Wanne (2) zwischen den Seitenwandungen (11, 12)eines tragenden Vorrichtungsgehäuses eingezogen ist.

14. Schwerkraftbandfilter nach einem der Ansprüche 1 bis 13, dadurch **gekennzeichnet**, daß unterhalb des Endlosbandes (4) ein Behälter (54), der Bandreinigungsflüssigkeit aufnimmt, und eine Heberpumpe vorgesehen ist, die die verschmutzte Flüssigkeit einer weiteren Filtrierung zuführt.

## Claims

1. Gravity band filter for the filtration of liquids containing solid particles by means of a filter band (4), in which
– a liquid-permeable endless band (4) is guidedly driven around deflection rollers and, together with two rotatable side plates (3.1, 3.2) in sealed engagement therewith, defines a trough-like filtration chamber (15),
– a feeder (30, 32) for feeding the liquid containing solid particles into the filtration chamber is provided,
– between the side plates entraining strips (41) are provided which are suspended pivotably about their

EP 0 347 445 B1

axes of rotation, which aid the discharge of filter cake from the trough-like filtration chamber (15) and which are movable outwards beyond the periphery of the side plates (3.1, 3.2) in the discharging position (75), and

– a collection device (2) for the collection and removal of the filtrate is arranged below the filtration chamber, characterised in that

– a deflector element (78) is provided close behind the discharging position (75) and pivots the entraining strips (41) backwards by positive engagement into the pendulum position.

2. Gravity band filter according to claim 1, characterised in that the deflector element (78) is secured at the free end of an elongate member (79) which has its inner end secured in the region of the stationary side plate shaft (30).

3. Gravity band filter according to claim 1 or 2, characterised in that the deflector element (78) is arranged adjacent to the outer edge of one side plate and at least in its outer region has a circumferential curved surface (75, 81, 83, 82) which is contacted by an edge (77) of the entraining strip (41).

4. Gravity band filter according to one of claims 1 to 3, characterised in that the deflector element (78) has in its forward region in the direction of rotation a first-contact zone (81) which intercepts the path of movement of the entraining strip (41) and pivots the entraining strip upwards.

5. Gravity band filter according to one of claims 1 to 4, characterised in that the deflector element (78) in its rearward region in the direction of rotation has a nose (83) against and along which the entraining strips (41) are moved.

6. Gravity band filter according to one of claims 1 to 5, characterised in that
– the entraining strips (41) are each formed with a bar (42) which projects in the discharge position approximately perpendicular to the filter band (4), with said bar conveying the solid particles to be discharged, and
– the bar (42) is provided on the edge remote from the filter band (4) in the discharge position with a screening strip (46) which extends forwards at an angle in the direction of advance.

7. Gravity band filter according to one of claims 1 to 6, characterised in that the entraining strips (41) are each mounted to be eccentrically oscillatable on the two side plates about a fixed or adjustable bearing shaft (hinge bolts (44)).

8. Gravity band filter according to one of claims 1 to 7, characterised in that the endless band (4) is a porous filter band of a flexible, high-tensile, wear-resistant material.

9. Gravity band filter according to claim 8, characterised in that the endless band (4) is a mesh or weave of fibres, threads or wires of flexible elastic, high-tensile and wear-resistant material, particularly of fine steel or plastics-coated wires.

10. Gravity band filter according to one of claims 1 to 9, characterised in that on the endless band (4) as a carrier band there lies and is entrained a filter fleece (62) drawn from a fleece roller (61).

11. Gravity band filter according to one of claims 1 to 10, characterised in that the feed advance control for the drive of the endless band (4) includes a float switch (25) and a switching device which actuates the drive a predetermined operational delay time after the preceding band advance.

12. Gravity band filter according to claim 11, characterised in that the feed advance control for the switching device comprises a time control with an erasable store for an assumed maximum operational time period after the preceding band advance, wherein the switching device switches in the drive after a predetermined operational period of time and clears the store.

13. Gravity band filter according to one of claims 1 to 12, characterised in that a trough (2) is provided as a collection device with an outlet, wherein the filtration chamber (15) extends into the interior of the collector and wherein the trough (2) is positioned between the side walls (11, 12) of a device housing which carries the trough.

14. Gravity band filter according to one of claims 1 to 13, characterised in that below the endless band (4) there is provided a reservoir (54), which receives the band cleaning liquid, and a lifting pump which delivers the contaminated liquid to a further filtration means.

**Revendications**

1. Filtre à bande travaillant par gravité pour la filtration au moyen d'une bande de filtre (4) de liquides contenant des particules solides dans lequel:
– une bande sans fin (4) perméable au liquide est entraînée et guidée sur des rouleaux de renvoi et forme, avec deux disques latéraux (3.1, 3.2) montés avec étanchéité et mobiles en rotation, une chambre de filtration (15) en forme de bac,

7

– il est prévu une entrée (30, 32) du liquide chargé de particules solides dans la chambre de filtration,

– il est prévu entre les disques latéraux des entraîneurs (41) montés pivotants autour de leur axe qui aident à l'évacuation du gâteau de filtration hors de la chambre de filtration (15) en forme de bac et qui au point de déversement (75), se déplacent en faisant saillie au delà de la circonférence des disques latéraux (3.1, 3.2) et

– un dispositif de collecte (2) pour la collecte et l'évacuation du filtrat est disposé au-dessous de la chambre de filtration,

caractérisé en ce que

– un élément basculeur (78) est monté juste derrière le point de déversement (75), lequel élément ramène par engagement de forme les entraîneurs (41 ) en position d'oscillation.

2. Filtre à bande travaillant par gravité selon la revendication 1, caractérisé en ce que l'élément basculeur (78) est fixé à l'extrémité libre d'un bras (79) qui est fixé par son extrémité intérieure dans la zone de l'axe fixe (30) des disques latéraux.

3. Filtre à bande travaillant par gravité selon la revendication 1 ou 2, caractérisé en ce que l'élément basculeur (78) est disposé à proximité du bord extérieur d'un disque latéral et présente au moins dans sa partie extérieure une courbure périphérique (75, 81, 83, 82) sur laquelle prend appui une arête de l'entraîneur (41).

4. Filtre à bande travaillant par gravité selon l'une des revendications 1 à 3, caractérisé en ce que l'élément basculeur (78) présente dans sa partie antérieure, vu dans le sens de rotation, un point de contact (81) qui interfère avec la trajectoire de déplacement de l'entraîneur (41) et fait pivoter celui-ci vers le haut.

5. Filtre à bande travaillant par gravité selon l'une des revendications 1 à 4, caractérisé en ce que l'élément basculeur (78) présente dans sa partie postérieure, vu dans le sens de rotation, un talon (83) jusqu'au niveau duquel les entraîneurs (41) sont amenés.

6. Filtre à bande travaillant par gravité selon l'une des revendications 1 à 5, caractérisé en ce que

– les entraîneurs (41) comportent chaque fois une traverse (42) qui est disposée sensiblement perpendiculairement à la bande de filtre (4) en position de déversement et qui transporte les particules solides à évacuer, et

– la traverse (42) est munie, au niveau de son arête éloignée de la bande de filtre (4) dans la position de déversement, d'une aile (46) qui est inclinée vers l'avant dans la direction de transport.

7. Filtre à bande travaillant par gravité selon l'une des revendications 1 à 6, caractérisé en ce que les entraîneurs (41) sont montés excentrés avec possibilité d'oscillation autour d'un axe fixe ou variable (axe d'articulation (44)) sur les deux disques latéraux.

8. Filtre à bande travaillant par gravité selon l'une des revendications 1 à 7, caractérisé en ce que la bande sans fin (4) est une bande de filtre poreuse en matériau flexible, résistant à l'usure et à la traction.

9. Filtre à bande travaillant par gravité selon la revendication 8, caractérisé en ce que la bande sans fin (4) est une toile ou un tissus de fibres, de fils ou de câbles en matériau flexible, résistant à la traction et à l'usure, en particulier de câbles en acier spécial ou revêtus de matière plastique.

10. Filtre à bande travaillant par gravité selon l'une des revendications 1 à 9, caractérisé en ce qu'une bande de filtre de non-tissé (62) provenant d'un rouleau de non-tissé (61) est appliquée sur la bande sans fin (4) servant de bande-support.

11. Filtre à bande travaillant par gravité selon l'une des revendications 1 à 10, caractérisé en ce que la commande d'avance pour l'entraînement de la bande sans fin (4) comprend un contacteur à flotteur (25) et un dispositif de commutation qui active l'entraînement un certain temps de fonctionnement après l'avance précédente de la bande.

12. Filtre à bande travaillant par gravité selon la revendication 11, caractérisé en ce que la commande d'avance pour le dispositif de commutation comporte une commande horaire avec une mémoire effaçable pour une durée maximale de fonctionnement déterminée après la dernière avance de la bande, le dispositif de commutation mettant en service l'entraînement après un temps de fonctionnement déterminé et effaçant la mémoire.

13. Filtre à bande travaillant par gravité selon l'une des revendications 1 à 12, caractérisé en ce qu'il est prévu comme dispositif de collecte une cuve (2) muni d'une sortie, à l'intérieur de laquelle est disposée la chambre de filtration (15), la cuve (2) étant montée entre les parois latérales (11, 12) d'une carrosserie porteuse.

14. Filtre à bande travaillant par gravité selon l'une des revendications 1 à 13, caractérisé en ce qu'il est prévu sous la bande sans fin (4) une cuve (54) qui contient un liquide de nettoyage de la bande et une pompe de relevage qui ramène le liquide pollué pour une nouvelle filtration.

Fig.1

Fig. 4

Fig. 5

Fig. 2

Fig. 3

Fig. 6

Fig. 7

Fig. 8